# EUROPEAN PATENT APPLICATION

(11) **EP 1 203 655 A1**
(43) Date of publication of application: **08.05.2002**
(21) Application number: 01309225.9
(22) Date of filing: 31.10.2001
(51) Int. Cl.: B32B 15/08, B32B 27/08, B32B 7/12, B65D 30/08, B65D 30/14

(54) **Retortable pouch**

(30) Priority: 06.11.2000 US 706685
(71) Applicant: Sonoco Development, Inc., Hartsville, South Carolina 29550 (US)
(72) Inventor: Bensur, Francis J., Noblesville, Indiana 46060 (US); Bailey, Irwin, Greenwood, Indiana 46163 (US)
(74) Representative: McNally, Roisin

(57) **Abstract**

A retortable pouch for use with food products is disclosed. The retortable pouch includes at least one sheet made from a three-layer or four-layer laminate material. The laminate material includes an outer polyethylene terephthalate layer, an optional nylon second layer, a metal foil third layer, and a polypropylene inner layer. A solventless adhesive is used to bond the layers together. The retortable pouch is formed byheat sealing the edges one of more sheets of the laminate such that the polypropylene layers face inward and are welded together. The pouch and its contents can then be pasteurized by heat-treatment without degradation of the laminate or the heat seal.

## Description

### FIELD OF THE INVENTION

The invention relates to an improved flexible container or retortable flexible pouch that can be sealed and then heated to a temperature sufficient to pasteurize or sterilize its contents.

### BACKGROUND OF THE INVENTION

In order to extend the shelf life of a food product, bacteria within the food must be eliminated. One common method for eliminating harmful bacteria in food products is by heating the food products to a temperature sufficient to kill the bacteria. For many years, food products were first sealed within metal cans and then the canned food was heated to a suitable temperature. After cooling, the canned food could be stored at room temperature for long periods of time.

Recently, metal cans have been replaced by flexible pouches called retort pouches. These pouches come in a variety of shapes and sizes. The two most common forms are described as flat or pillow shaped and gusset or stand-up shaped pouches. These pouches are considerably lighter and lower cost than metal cans, and are considered as a source of reduction when placed into the public waste stream. The typical flat or pillow pouch consists of one or two sheets of laminated material. The typical gusset or stand-up pouch is manufactured by using three sheets of laminated material. Both types are sealed together by heat-sealing after filling. This process can be accomplished by using pre-made pouches, filling and sealing out of line, or by form, fill, and seal inline.

In order to be used in a retort process, the flexible pouch must comply with a number of requirements. The U.S. government Food and Drug Administration (FDA) is very specific as to the materials which can and cannot be used for flexible packages that will be subjected to temperatures over 250°F. Specifically, 21 C.F.R. § 177.1390 regulates the chemical components that can be used to construct a flexible pouch that will be subjected to these extreme temperature environments. The physical properties of these flexible pouches: lamination bond strengths, heat seal strengths, WVTR (water vapor transmission rates), OTR (oxygen transmission rates), and burst analysis exceed normal testing parameters, but the liquid components used to adhere the films together, along with the films themselves, must comply with migratory testing guidelines established by the FDA.

The components that make up the pouch (ink, adhesive, films, and solvents) must not contain mobile components that might contaminate the contents. Any liquid, that is to say, in this case the adhesive, that is used inside ofthe functional barrier (foil), must be subjected to migration testing if the chemical nature of that adhesive is not made from an aliphatic isocyanate. The regulation is waived if the adhesive components are of an aliphatic nature. In such the adhesive is deemed FDA § 177.1390 compliant. The pouch still must remain airtight and bacteria-proof (hermetically sealed) after going through the normal retort process, which exposes the pouch to temperatures in the range of from 120°C to 130°C for 30 to 80 minutes at a pressure of 3.0 to 5.0 Bar. This temperature, pressure, and time may be varied slightly depending on the pouch size and the contents within the pouch.

One type of flexible retort pouch that is currently available is constructed of a four layer laminate with an outer layer of polyethylene terephthalate (PET), a metal foil layer, a polyamide layer, followed by an inner layer of cast polypropylene (CPP). Another type is constructed of a three-layer laminate with an outer layer of PET, a metal foil layer, followed by an inner layer of CPP. The layers of such prior art packages are held together by urethane adhesives that contain methyl ethyl ketone, ethyl acetate, or acetone as solvents. Until recently, solvent based adhesives were the only type that could be used to manufacture retortable structures.

Solventless adhesives for retort applications have been developed only in the last two years. These solventless adhesives are defined as a two-component urethane system in which one component is isocyanate and the other component is polyol. The isocyanate part is aliphatic to meet the FDA guidelines for retortable materials. These components are low molecular weight in nature, and require no solvent for dispersion or application. When the two componesnts are combined in the proper mix ratio, and applied on a solventless laminator at the proper coating weight and temperature, and with the proper cure time, the end result is a cross-linked polyester urethane film that adheres the adjacent layers together within a retort lamination.

### SUMMARY OF THE INVENTION

The present invention relates to the manufacturing of laminates that are suitable in the construction of a flexible retort pouch, and that use solventless adhesives.

One embodiment of the invention is a retortable pouch constructed from a four layer laminate including an outer polyester layer, a polyamide second layer, a metal foil third layer, and a polypropylene inner layer. The layers are bonded together with solventless adhesives.

Another embodiment ofthe invention is a retortable pouch constructed from a four layer laminate including an outer PET layer, a metal foil second layer, a nylon third layer, and a CPP inner layer. The layers are bonded together with solventless adhesives.

Another embodiment of the invention comprises a laminated material consisting of a polyester first layer, polyamide and metal foil second and third layers, a polypropylene fourth layer, and solventless adhesives bonding the layers together.

Another embodiment of the invention is a three-ply material consisting of an outer PET layer, a metal foil second layer, and a CPP inner layer. The layers are bonded together with solventless adhesives.

The foregoing and other features and advantages of the present invention will become more apparent in light of the following detailed description ofthe preferred embodiments thereof, as illustrated in the accompanying figures.

### BRIEF DESCRIPTION OF THE DRAWINGS

Figure 1 is a plan view of a pillow retortable pouch according to the present invention.
Figure 2 is an oblique view of a stand-up retortable pouch according to the present invention.
Figure 3 is a cross-section through one sheet of a three-layer retortable pouch shown in Figure 1.
Figure 4 is a cross-section through one sheet of a four-layer retort able pouch shown in Figure 1.

### DETAILED DESCRIPTIONS OF THE DRAWINGS

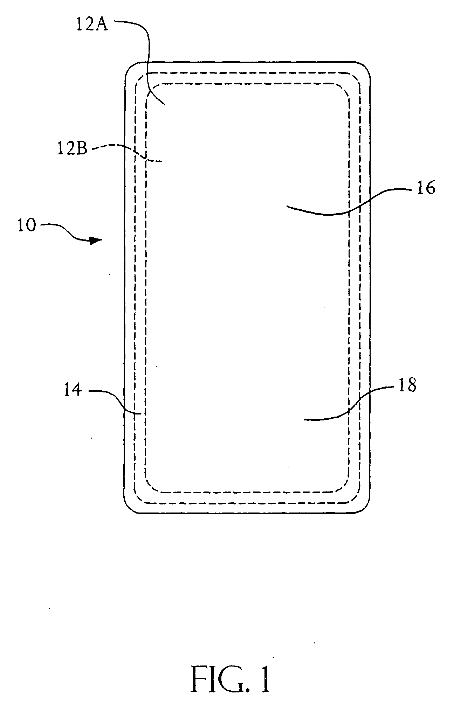

Referring to the drawings, and initially to Figure 1, one form of pillow or flat retortable pouch according to the present invention is shown and indicated generally by the reference numeral 10. The pillow pouch 10 includes two sheets 12A and 12B of laminated material, joined and sealed together about their respective edges by a heat seal 14. A storage space 16 is defined by the area between the two sheets 12A, 12B and within the heat seal 14. The storage space is sealed off from the surrounding environment and contains the contents 18 of the pouch, which may be, for example, foodstuffs. The sheets 12A, 12B can be formed in a suitable shape desired for containing the food product. For example, one ofthe sheets 12B maybe formed into a dish shape, with a planar flange. The second sheet 12A can then be heat sealed to the flange of the first sheet 12B.

While the package is described as having two sheets 12A, 12B, it should be readily apparent to those skilled in the art that a single sheet could be used. The sheet could be folded upon itself to form the two layers. The three unconnected edges would then be heat sealed after the contents are placed between the folded-over layers.

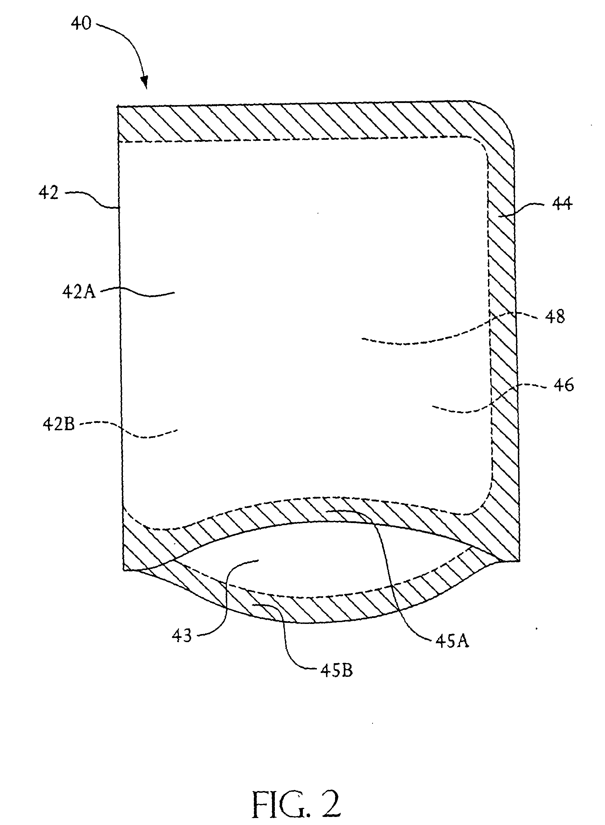

Referring now to Figure 2, one form of gusset or stand-up retortable pouch is indicated generally by the reference numeral 40. The gusset pouch 40 includes two sheets of laminated material 42 and 43. One sheet 42 is folded to form the front and back sheets 42A and 42B of the pouch. The sheets are joined and sealed together about their respective edges by a heat seal 44 round the sides and top, and heat seals 45A, 45B in the bottom gusset. A storage space 46 is defined by the area between the three sheets 42A, 42B, 43 and within the heat seals 44, 45A, 45B. The storage space is sealed off from the surrounding environment and contains the contents 48 ofthe pouch. The sheets 42A, 42B, 43 can be formed in any suitable shape desired for containing the food products. Normally, two webs of laminated material are fed into a pouch machine. A main web forms the sheet 42, and is folded in half along one side ofthe pouch to form the front sheet 42A and the back sheet 42B, which are aligned one on top ofthe other. The free edges of the sheets 42A and 42B are heat sealed together by the heat seal 44 along the other side of the pouch. The second web is fed into the side of the machine to form the bottom gusset sheet 43, and is heat sealed to the front and back sheets 42A and 42B to form an open-topped pouch. The pouch can now be stored for later filling, or can go idrectly on-line into the filling machinery. After the contents have been placed within the pouch, the top edges of the front and back sheets 42A and 42B are sealed together by a final heat seal 44.

While the package is described as having two sheets 42 and 43, it should be readily apparent to those skilled in the art that three sheets could be used, with the front 42A and rear 42B being formed from separate webs of materials, heat-sealed together along both sides. It will also be apparent that a single sheet could be utilized. The sheet could be folded upon itselfto form the three sheets. Typically, the middle ofthe single sheet would form the gusset 43, and the ends would meet at the top of the pouch. The unconnected side and top edges would then be heat sealed, at least one of them being sealed only after the contents are placed between the folded-over layers.

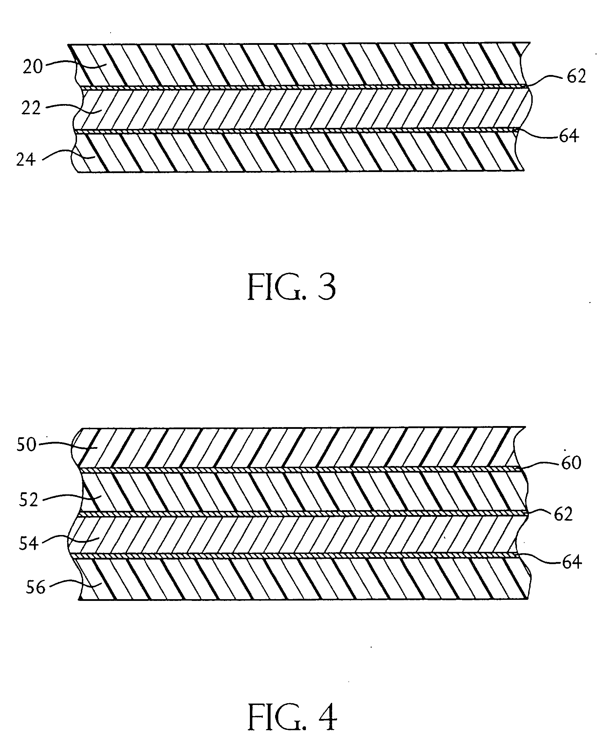

The sheets 12A, 12B of the pillow retortable pouch 10 can be manufactured from a 3-layer laminated structure as shown in Figure 3, or from a 4-layer laminated structure 42A, 42B as shown in Figure 4. The sheets 42A, 42B, 42C of the stand-up pouch 40 can likewise be formed from either of those structures.

Referring now to Figure 3, the 3-layer laminate includes three layers. The outermost layer 20, away from the package contents 18 or 48, is made from polyester. In the preferred embodiment, the layer 20 is polyethylene terephthalate, preferably about 9 to 12 microns in thickness. The second layer 22, which is immediately adjacent to the outer layer 20, is a metal foil layer having a preferred thickness of 7 to 14 microns. The innermost layer 24 is made from cast polypropylene and has a preferred thickness of 55 to 110 microns.

Referring now to Figure 4, the 4-layer laminate includes four layers. The outermost layer 50, that is to say, the layer that in the assembled package faces away from the package contents 18 or 48, is made from polyester. In the preferred embodiment, the layer 50 is polyethylene terephthalate, having a preferred thickness of about 9 to 12 microns. The second layer 52, which is immediately adjacent to the outer layer 50, is made from polyamide. In the preferred embodiment, the layer 52 is nylon with a preferred thickness of 14 to 25 microns. The third layer 54 is ametal foil layer having a preferred thickness of about 7 to 14 microns. The innermost layer 56 is made from cast polypropylene and preferably has a thickness of 55 to 110 microns. The positions ofthe nylon layer 52 and the foil layer 54 within the laminate structure can be reversed.

All layers in the retortable package are bonded together by solventless adhesive. Solventless adhesives based on two component materials that have the chemical composition of a polyol and an isocyanate are suitable. Both ofthese components can be based on chemicals that are low enough in molecular weight to be applied to the films without needing solvents for dilution and application. The chemical constituents are still found to be 21 C.F.R. § 177.1390 and § 175.105 approved where needed within the package.

The PET and nylon layers 50 and 52 are bonded together by an adhesive layer 60, which is preferably Tycel 7919/7291, manufactured and sold by the Liofol Company, and applied at a mix ratio of 6:1 and a coating weight of 1.2 to 1.5 lbs per 3000 sq. ft. The nylon and foil layers 52 and 54, or the polyester and foil layers 20 and 22, are bonded together by an adhesive layer 62, which is also preferably Tycel 7919/7291 at a mix ratio of 6:1 and applied at a coating weight of 1.2 to 1.5 lbs per 3000 sq ft. The foil layer 22 or 54 and the cast polypropylene layer 24 or 56 are bonded together by an adhesive layer 64, which is preferably Tycel 7990/6092, manufactured and sold by Liofol Company, and applied at a mix ratio of 6:1 and a coating weight of 1.2 to 1.5 lbs per 3000 sq ft. The Tycel 7990/6092 adhesive is a solventless adhesive that has been recently been approved by the FDA for use in food packaging under 21 CFR § 177.1390. The retortable package described above is designed to withstand the anticipated applied temperatures in the range of 120°C to 130°C (250°F to 265 °F) for 30 to 80 minutes without degradation. These are the temperatures and times typically needed to eliminate bacteria from food in a retort pouch.

Testing was conducted on a retortable pouch made according to the present invention. The pouch 40, as shown in Figure 2, was formed from three sheets 42, cut from the preferred form of the 4-layer material shown in Figure 4. The sheets 42 were sealed together by heat sealing. Some samples of the sealed gusset pouch were then retorted in an autoclave at 125°C ± 4°C for 30 minutes at 3.3 bar pressure, and allowed to cool. Other samples were not heat-treated. Substantially identical pouches formed from the commercially available 4-layer laminate mentioned above were used for comparison. The pouches were tested to compare the forces needed to pull the heat seal side edges of the two pouches apart. As may be seen from Table 1, the testing established that after the pouches had been retorted the force needed to pull apart the heat seals was considerably higher for the retort pouch according to the present invention than for the retort pouches currently in commercial use.

**Table 1**

| **Heat Seal Values Before and After Retorting (N/15mm)** | | | | |
|---|---|---|---|---|
| Film Structure | Side Seal | | Bottom Seal | |
| | Before | After | Before | After |
| Commercial Pouch PET/Nylon/Foil/CPP | 72.9 | 38.9 | 71.3 | 36.6 |
| Solvent Based Adhesives | SD = 4.7 | SD = 1.8 | SD = 7.8 | SD = 3.2 |
| Invention Pouch PET/Nylon/Foil/CPP | 71.0 | 62.6 | 62.0 | 54.8 |
| Solventless Adhesives | SD = 3.0 | SD = 1.0 | SD = 3.1 | SD = 3.1 |
| SD = Standard Deviation | | | | |

In either type of retortable pouch, the pillow pouch shown in Figure 1 or the stand-up pouch shown in Figure 2, specific ink systems can be used to reverse print the polyester layerbefore lamination. This is an option that maybe selected by the end user depending on what markets the end product is intended to be supplied in, and is not essential to the invention in its broadest sense. Because the ink is outside the foil functional barrier, it is subject to the more lenient regulations appropriate to that position.

Although the invention has been described and illustrated with respect to the exemplary embodiments thereof, it should be understood by those skilled in the art that the foregoing and various other changes, omissions, and additions may be made therein and thereto, without parting from the spirit and scope of the present invention.

## Claims

1. A retortable pouch having at least one sheet comprising a laminate comprising:
a polyester outer layer;
a metal foil intermediate layer;
a polypropylene inner layer; and
optionally a polyamide layer between the polyester outer layer and the polypropylene inner layer, on either side of the metal foil intermediate layer;
each layer being bonded to the adjacent layer or layers with a solventless adhesive, the pouch including a storage space substantially enclosed by the said at least one sheet.

2. A retortable pouch according to claim 1 wherein the pouch has at least one seam, which joins edges of two portions of the laminate, which edges lie face to face with the said polypropylene layers of the two portions of the laminate facing one another.

3. A retortable pouch according to claim 2, wherein the bonding is effected by welding of the polypropylene.

4. A retortable pouch according to claim 1, wherein the said polyester layer is made of polyethylene terephthalate.

5. A retortable pouch according to claim 1, wherein the laminate comprises the said polyamide layer, and wherein the said polyamide layer is made of nylon.

6. A retortable pouch according to claim 1, wherein the said polypropylene layer is cast polypropylene.

7. A retortable pouch according to claim 1, wherein the laminate comprises the said polyamide layer adjacent to the said polyester layer and to the said foil layer, and the adhesive which bonds the said polyester layer to the said polyamide layer is the same as the adhesive which bonds the said polyamide layer to the said foil layer.

8. A retortable pouch according to claim 1, wherein the said at least one sheet is two sheets, and wherein the said polypropylene layers are bonded together along their respective edges to form a pillow pouch.

9. A retortable pouch according to claim 1, wherein the said at least one sheet is at least two sheets, which are sealed together to form a stand-up pouch.

10. A retortable pouch according to claim 1, wherein the storage area contains a product, and the at least one sheet is sealed so as to substantially inhibit the ingress of bacteria into the storage area.

11. A retortable pouch having at least two sheets each comprising a laminate comprising an outer polyethylene terephthalate layer, optionally a nylon second layer adjacent to said polyethylene terephthalate layer, a metal foil intermediate layer adjacent to said polyethylene terephthal ate layer or to said nylon layer, and a polypropylene inner layer adjacent to said metal foil layer, each layer being bonded to the adjacent layer or layers with a solventless adhesive, and wherein the said inner layers ofthe two sheets are bonded together along all of their edges.

12. A retortable pouch according to claim 11, wherein the nylon layer is present, and the adhesive that bonds the polyethylene terephthalate layer to the nylon layer is the same as the adhesive that bonds the nylon to the foil layer.

13. A retortable pouch according to claim 11, wherein the polypropylene layer is cast polypropylene.

14. A retortable pouch according to claim 11, wherein the two sheets are bonded together by heat welding the polypropylene.

15. A laminated material for use in a retortable pouch, the laminated material comprising:
a polyester first layer;
a second layer adhesively attached to the first layer with a solventless adhesive;
a third layer attached to the second layer with a solventless adhesive; and
a polypropylene fourth layer attached to the third layer with a solventless adhesive;
wherein one of the second and third layers is a polyamide layer and the other of the second and third layers is a metal foil layer.

16. A material according to claim 15, wherein the polyamide layer is the second layer, and the solventless adhesive bonding the first layer to the second layer and the second layer to the third layer is the same.

17. A material according to claim 15, wherein the said polyester is polyethylene terephthalate.

18. A material according to claim 15, wherein the said polyamide is nylon.

19. A material according to claim 15, wherein the said polypropylene is cast polypropylene.

20. A laminated material for use in a retortable pouch, the laminated material comprising a polyester first layer, a metal foil second layer attached to the first layer with a solventless adhesive, and a polypropylene third layer attached to the second layer with a solventless adhesive.

21. A material according to claim 20, wherein the first layer is polyethylene terephthalate.

22. A material according to claim 20, wherein the said polypropylene is cast polypropylene.
